# EUROPEAN PATENT APPLICATION

(11) **EP 1 369 311 A1**
(43) Date of publication of application: **10.12.2003**
(21) Application number: 02405618.6
(22) Date of filing: 18.07.2002
(51) Int. Cl.: B60R 21/02

(54) **Dividing barrier for transporting animals in the rear space of a motor vehicle**

(30) Priority: 31.05.2002 CH 9182002
(71) Applicant: Gurrieri, Santo, 6814 Lamone (CH)
(72) Inventor: Gurrieri, Santo, 6814 Lamone (CH)
(74) Representative: Fiammenghi-Domenighetti, Delfina

(57) **Abstract**

A description is given of a dividing barrier (1) for defining the space occupied by animals in the rear space (2) of a hatchback motor car (3) having an opening (4) closed by a top-hinged door (5), the edge of which rests against a seal (6) that surrounds the said opening (4), and also having at least two lateral recesses (11, 12) to support a shelf (13) designed to define the top of the rear space (2), the dividing barrier (1) consisting of a lattice (7) made up of a plurality of vertical (8) and horizontal (9, 9') parallel bars, at least some of which have telescopically extensible ends. In the dividing barrier (1) in question at least two of the vertical bars (8) have their ends (8e) bent up and flattened and can be contained between the edge of the door (5) and the seal (6) when the door (5) is closed, and the lowest horizontal bar (9') has its ends (10) shaped in such a way that they can be contained in two of the lateral recesses (11, 12).

## Description

The present invention relates to car accessories, and in particular to dividing barriers, prescribed by current legislation, for defining the space occupied by pets transported in the rear space of a motor car.

More specifically, the invention relates to dividing barriers consisting of a lattice made up of a plurality of horizontal and vertical bars secured together, with at least some of their ends being telescopically extensible, suitable for use in "hatchback"-type motor cars, the rear end of which contains an opening closed by a top-hinged door whose edge rests on a resilient seal usually made of rubber, which at least partly surrounds the said opening.

In all such motor cars, side brackets are fitted to the opposite walls of this rear space to support the parcel shelf, which rests at each side on at least two recesses formed in these brackets.

Dividing barriers of the type described and currently in use present certain drawbacks, among which are a complicated fixing system and a large vertical dimension which excessively limits the space left for the animals, as the lower ends of these barriers stand, at various angles, on the floor of the rear space, thereby limiting the available volume.

The dividing barriers encompassed by the current state of the art can also, in the event of a violent impact, be dislodged from their fixing points, which are on the inside of the said rear space, and can be thrown violently forwards towards the area occupied by the passengers and the driver.

The inventors of the present invention have devised a dividing barrier of the general type described above but which, in its concept and in the disposition and design of its parts, eliminates all the drawbacks listed above.

The dividing barrier of the invention likewise consists of a lattice of horizontal and vertical bars, and at least two of the vertical bars have a telescopic upper end that is flattened and shaped in such a way that it can be contained between the said resilient seal and the upper edge of the door when the door is closed. The lowest horizontal bar, moreover, has two telescopic ends whose shape and design is such that they can be housed in two of the said recesses in the side brackets that support the parcel shelf.

The dividing barrier of the invention can be fitted in the rear space of a motor car simply by resting the tops of the vertical bars against the above-described seal and those of the lowest horizontal bar in the abovementioned recesses, without having to resort to any system involving the use of screws, fixing plates or similar parts.

When the door is closed the dividing barrier remains reliably fixed, and cannot be thrown forwards towards the occupants of the car in the event of an accident.

To secure the barrier temporarily before closing the door which holds it securely, the inventor suggests securing it to a part of the motor car - for example, as will be explained later, to the rear seat headrests. For this operation any simple type of tie or rubber band of the sort used for tying loads to a luggage rack can be used.

The subject of the present invention is therefore a dividing barrier as described in the appended Claim 1.

A more detailed description will now be given of a preferred illustrative embodiment of the dividing barrier of the invention, with reference also to the appended drawings, which show:
- in Figure 1, an end view of the rear space of a motor car with the dividing barrier of the invention fitted;
- in Figure 2, a longitudinal section through the same space as in Figure 1.

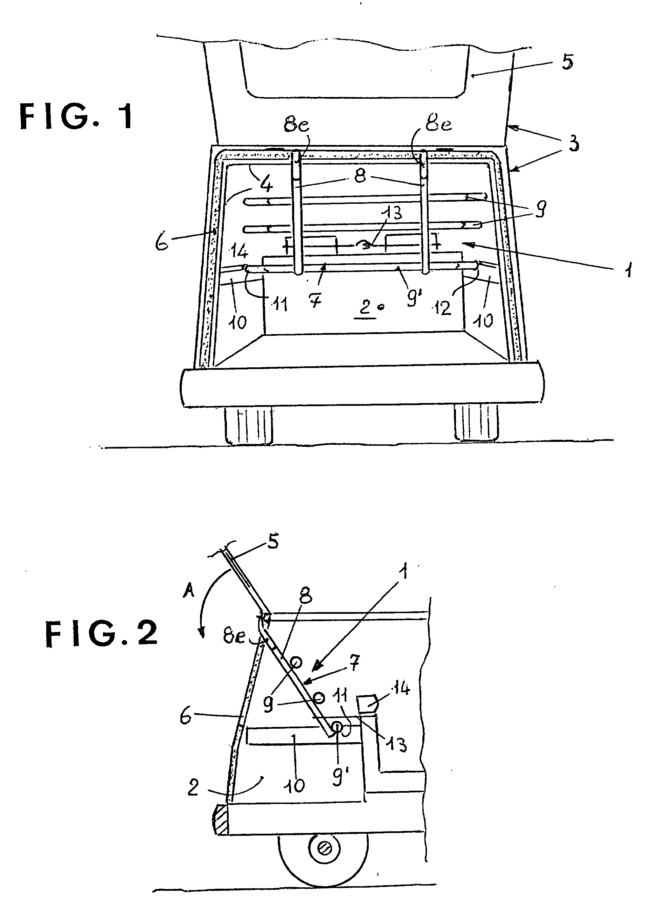

Beginning with Figure 1, this shows how the rear space 2 of a hatchback-type motor car 3 is fitted with the dividing barrier 1, which consists of a lattice 7 made up of a number of vertical bars 8 (two in this case) and horizontal bars 9, 9' which are joined together by welding, or by through bolts or by similar systems.

All ends of the bars 8, 9, 9' are telescopically extensible by known methods, except for the lower ends of the two vertical bars 8, which, in order to occupy less space, are fixed and end level with the lowest horizontal bar 9'.

The upward ends 8e of the said vertical bars 8 are however telescopically extensible so that their length can be adjusted to the dimensions of the opening 4 of the said rear space 2, and are flattened and optionally slightly bent to allow them to rest on the seal 6 which runs around the opening 4, and to be contained between the said seal 6 and the edge of the door 5 when this is closed.

The telescopic ends of the lowest horizontal bar 9', on the other hand, are shaped to allow them to sit in the recesses 11, 12 which are usually provided in the two side brackets 10 which provide the support for the shelf defining the rear window area. This shelf is not shown because of course it has to be removed before the dividing barrier 1 is installed.

As also shown in Figure 2, when the abovementioned ends of the vertical bars 8 and of the lowest horizontal bar 9' are positioned as described above, the dividing barrier 1 of the invention is securely and firmly locked in the desired position simply by closing the door 5 (arrow A, Figure 2).

As already mentioned, while installing the dividing barrier 1, it is helpful to secure it, as indicated in the figures, with a tie or a rubber band 13 to connect it for example to the headrests 14 of the rear seats so that it does not pivot downwards about its points of support on the side recesses 11, 12.

In order not to have to use such a tie or rubber band 13, the inventor also envisages the possibility of applying, to the flattened parts 10 of the vertical bars 8 and to the resilient seal 6, some flat VELCRO® pieces positioned so as to cling together reversibly in the known manner of this particular kind of material. The dividing barrier can in this way easily be fixed without resorting to additional means. This case is not shown in the figures.

A dividing barrier according to the invention can be made from inexpensive materials and takes very little time to manufacture, which adds the advantage of low cost to the practical and functional advantages discussed above.

To avoid possible damage or abrasion to the parts of the rear space 2, door 5 and seal 6, the inventors envisage the application, to the terminal parts of the said telescopic ends, and especially to those of the vertical bars 8, suitable guards, consisting for example of sheaths of resilient material. This provision, already in use for similar applications in the prior art, is not depicted in the drawings.

It should be pointed out that, if there are no opposing side recesses suitable for the purposes described above in the rear space 2 of the motor car 3, the inventor envisages introducing two supporting struts, with the abovementioned recesses on one end, the struts either resting or not resting on the floor of the rear space and/or being fitted to its opposing side walls. This solution is not depicted in the drawings.

## Claims

1. Dividing barrier (1) for defining the space occupied by pets in the rear space (2) of a hatchback-type motor car (3) having an opening (4) closed by a top-hinged door (5), the edge of which rests against a resilient seal (6) that at least partly surrounds the said opening (4), and also having at least two lateral recesses (11, 12) to support a removable shelf (13) designed to define the top of the rear space (2), the dividing barrier (1) consisting of a lattice (7) made up of plurality of vertical (8) and horizontal (9, 9') parallel bars, at least some of which have telescopically extensible ends, the said barrier being **characterized in that** at least two of the vertical bars (8) have their ends (8e) bent up and ending in a flattened part (10) designed to be contained between the said edge of the door (5) and the said resilient seal (6) when the door (5) is closed, and **in that** the lowest horizontal bar (9') has its ends (10) shaped in such a way that they can be contained in two of the said at least two lateral recesses (11, 12) and remain fixed in these.

2. Dividing barrier according to Claim 1, in which the said lateral recesses (11, 12) are formed on two supporting struts fitted laterally to two opposite parts of the said rear space (2).

3. Dividing barrier according to one of the preceding claims, in which the ends (8e) of the said two or more vertical bars (8) and of the said lowest horizontal bar (9') are covered with a sheath of resilient material.

4. Dividing barrier according to either of Claims 1 and 2, in which components covered in VELCRO® are attached to the said flattened parts (10) of the vertical bars (8) and to the said resilient seal (6) so as to cling together.

5. Dividing barrier according to one of the preceding claims, in which the lower ends (8f) of the said two or more vertical bars (8) are not telescopically extensible and end level with the said lowest horizontal bar (9').

6. Dividing barrier according to one of the preceding claims, in which the said vertical (8) and horizontal (9, 9') bars are made from tubes of welded sheet metal.
